(19)

Europäisches
Patentamt

European
Patent Office

Office européen
des brevets

(11) **EP 4 496 037 A1**

(12) **EUROPEAN PATENT APPLICATION**

(43) Date of publication:
**22.01.2025 Bulletin 2025/04**

(21) Application number: **24186431.3**

(22) Date of filing: **04.07.2024**

(51) International Patent Classification (IPC):
***H01M 4/58*** (2010.01)          ***H01M 4/66*** (2006.01)
***H01M 10/0585*** (2010.01)

(52) Cooperative Patent Classification (CPC):
**H01M 10/0585; H01M 4/5825; H01M 4/667;**
H01M 2200/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.07.2023   KR 20230094174**

(71) Applicant: **Samsung SDI Co., Ltd
Gyeonggi-do 17084 (KR)**

(72) Inventors:
• **Ha, Jaehwan**
  **17084 Gyeonggi-do (KR)**
• **Kim, Duckhyun**
  **17084 Gyeonggi-do (KR)**
• **Lee, Dong Myung**
  **17084 Gyeonggi-do (KR)**
• **Yoo, Heeeun**
  **17084 Gyeonggi-do (KR)**

(74) Representative: **Michalski Hüttermann & Partner
Patentanwälte mbB
Kaistraße 16A
40221 Düsseldorf (DE)**

(54) **ELECTRODE ASSEMBLY AND RECHARGEABLE BATTERY INCLUDING THE SAME**

(57)      An electrode assembly for a rechargeable battery according may include a stacked-type electrode assembly in which positive electrodes, separators, and negative electrodes are alternately stacked, wherein the positive electrode on an outermost side of the stacked-type electrode assembly, the positive electrode includes a substrate having an electrode uncoated region and an electrode active region, an active material layer formed on one surface of the substrate in the electrode active region, and a ceramic layer formed on the opposite surface of the substrate in the electrode active region, and the one surface is relatively adjacent to the center and faces the negative electrode.

**EP 4 496 037 A1**

**Description**

**BACKGROUND**

**1. Field of the Disclosure**

Embodiments of the present disclosure described herein are related to an electrode assembly and a rechargeable battery including the same.

**2. Description of the Related Art**

Mobile information devices such as cell phones, laptops, smart phones, and/or the like have utilized rechargeable batteries having relatively high energy density and relatively easy portability as a driving power source.

A rechargeable battery may include an electrode assembly in which a negative electrode, a separator, and a positive electrode are sequentially accumulated, and the positive electrode and the negative electrode may be formed in different areas.

However, when the areas of two electrodes are different, the sizes of active material layers of different polarities may be different, and a short circuit may occur when an exposed substrate and the active material layer of the different polarity therefrom are in contact with each other. When such a short circuit occurs, a relatively large current flows to one electrode within a short period of time, which may cause the rechargeable battery to be damaged (e.g., ignited or explode).

Additionally, when the outermost electrode is the positive electrode, the active material layer of the positive electrode is formed on the outside, but there is no negative electrode facing it, so lithium may precipitate out.

**SUMMARY**

Aspects according to one or more embodiments are directed toward an electrode, an electrode assembly including the same, and a lithium rechargeable battery that may reduce the risk of short circuits occurring in areas where a current is concentrated and/or reduce a lithium precipitation on a positive electrode that does not face a negative electrode.

Additional aspects will be set forth in part in the description which follows and, in part, will be apparent from the description, or may be learned by practice of the presented embodiments of the present disclosure.

According to one or more embodiments, an electrode assembly for a rechargeable battery may include a stacked-type or kind electrode assembly (e.g., a stacked electrode assembly) in which positive electrodes, separators, and negative electrodes are alternately stacked, wherein the positive electrode positioned on the outermost side of the stacked-type or kind electrode assembly includes a substrate having an electrode uncoated region and an electrode active region, an active material layer formed on one surface of the substrate in the electrode active region, and a ceramic layer formed on the other surface (e.g., opposite surface) of the substrate in the electrode active region, and the one surface is relatively adjacent to the center and faces the negative electrode.

According to one or more embodiments, a functional layer formed between the substrate and the active material layer may be further included.

According to one or more embodiments, the functional layer may include a first portion that overlaps the electrode active region and a second portion that extends from the first portion to the electrode uncoated region.

According to one or more embodiments, the ceramic layer may be formed in substantially the same planar shape as the functional layer.

According to one or more embodiments, the area of the second portion may be equal to or less than about 60% of the electrode uncoated region (e.g., at most about 60% of the total area of the electrode uncoated region).

According to one or more embodiments, the width of the second portion may be about 0.1 mm to about 3 mm.

According to one or more embodiments, the resistance value (e.g., electron resistance or electrical resistance) of the functional layer may be greater than that of the substrate and the active material layer.

According to one or more embodiments, the boundary of the functional layer may be positioned within the boundary of the substrate.

According to one or more embodiments, the functional layer may include a material including a compound represented by Chemical Formula 1, a compound represented by [Chemical Formula 2], or a combination thereof:

$$\text{Chemical Formula 1} \qquad Li_{a1}M^1_{x1}Fe_{1-x1}PO_4$$

in Chemical Formula 1, $0.90 \leq a1 \leq 1.5$, $0 \leq x1 \leq 0.4$, $M^1$ is Mg, Co, Ni or a combination thereof.

$$\text{Chemical Formula 2} \qquad Li_{a2}Mn_{x2}Fe_{1-x2}PO_4$$

in Chemical Formula 2, $0.90 \le a2 \le 1.5$, $0.1 \le x2 \le 1$.

According to one or more embodiments, the width of the electrode uncoated region may be about 2 mm to about 7 mm.

According to one or more embodiments, the electrode uncoated region may protrude from one side of the electrode active region.

According to one or more embodiments, the distance between the border of the positive electrode and the border of the negative electrode may be about 0.5 mm to about 3.0 mm.

According to one or more embodiments, a rechargeable battery may include the electrode assembly described above and an electrolyte.

According to one or more embodiments, the electrode assembly including the electrode not only reduces the risk of a short circuit occurrence, but also reduces a lithium precipitation at the positive electrode positioned outermost, thereby providing the electrode assembly that is relatively safe and has improved electric characteristics and the rechargeable battery including the same.

## BRIEF DESCRIPTION OF THE DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:

FIG. 1 is a top plan view (e.g., a plan view) of an electrode according to an embodiment.
FIG. 2 is a cross-sectional view taken along a line II-II' of FIG. 1.
FIG. 3 is a schematic exploded perspective view of a stacked-type or kind electrode assembly according to an embodiment.
FIG. 4 is a schematic cross-sectional view of another stacked-type or kind electrode assembly according to an embodiment.
FIG. 5 is a cross-sectional view showing a positive electrode according to an embodiment taken along a line II-II' in FIG. 1.

## DETAILED DESCRIPTION

The present disclosure will be described more fully hereinafter with reference to the accompanying drawings, in which example embodiments of the disclosure are shown. As those skilled in the art would realize, the described embodiments may be modified in one or more suitable different ways, all without departing from the scope of the present disclosure. As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

The size and thickness of the configurations are optionally shown in the drawings for convenience of description, and the present disclosure is not limited thereto.

In the drawings, the thickness of layers, films, panels, regions, etc., are exaggerated for clarity. In the drawings, for better understanding and ease of description, the thicknesses of some layers and areas are exaggerated. It should be understood that when an element such as a layer, film, region, or substrate is referred to as being "on" another element, it can be directly on the other element or intervening elements may also be present.

In some embodiments, unless explicitly described to the contrary, the word "comprise," and variations such as "comprises" or "comprising," should be understood to imply the inclusion of stated elements but not the exclusion of any other elements.

Example embodiments are described herein with reference to cross-sectional views, which are schematic diagrams of idealized embodiments. As such, for example, variations from the illustrated shape depending from manufacturing techniques and/or tolerances should be expected. Accordingly, the embodiments described in this disclosure should not be construed as limited to the specific shapes of the regions as shown in this disclosure, but should include, for example, variations in shapes resulting from manufacturing. For example, areas shown or described as flat may typically have rough and/or non-linear features. Moreover, angles shown as sharp may be rounded. Accordingly, the areas shown in the drawings are schematic in nature and the shapes are not intended to depict the exact shape of the areas and are not intended to limit the scope of the claims.

The present disclosure can be embodied in many different forms, and should not be construed as limited to the implementation examples described in this disclosure. Embodiments are provided such that this disclosure will be thorough and complete, and will fully convey the scope of the present disclosure to those skilled in the art. Like reference numerals denote like elements.

It will be understood that if (e.g., when) an element is referred to as being "on" another element, it may be directly on top of the other element, or there may be other element(s) intervening between them. In contrast, if (e.g., when) an element is said to be "directly on" another element, there are no intervening elements between them.

Terms such as "first," "second," "third," and/or the like may be utilized in this disclosure to describe one or more suitable elements, components, regions, layers, and/or zones, and these elements, components, regions, layers, and/or zones should not be limited by these terms. These terms are utilized only to distinguish one element, component, area, layer, or zone from another element, component, area, layer, or zone. Accordingly, a first element, component, region, layer, or zone described herein may be referred to as a second element, component, region, layer, or zone without departing from the teachings of the present disclosure.

The terminology utilized in this disclosure is not intended to describe only specific implementation examples and does not limit the present disclosure. The singular forms utilized herein are intended to include the plural forms, including "at least one," unless the content (e.g., amount) clearly dictates otherwise. Further, the utilization of "may" when describing embodiments of the present disclosure refers to "one or more embodiments of the present disclosure". "At least one" should not be construed as limiting to the singular. The term "and/or" as utilized herein includes any and all combinations of one or more of the listed items. The terms "include" and/or "including" as utilized in the detailed description specify the presence of the specified feature, area, integer, step, operation, element, and/or component, and the presence or addition of one or more other features, area, integers, steps, operations, elements, and/or groups thereof is not excluded.

Spatially relative terms such as "below," "under," "lower portion," "on," "above," "upper portion," etc. are utilized to facilitate describing the relationship of one element or feature to another element or feature. It will be understood that spatially relative terms are intended to encompass different orientations of a device in utilize or operation in addition to the orientation shown in the drawings. For example, if (e.g., when) the device in the drawing were turned over, an element described as "below" or "under" another element or feature would be oriented "above" the other element or feature. Therefore, the example term "under" can encompass both (e.g., simultaneously) the above and under directions. The device may be positioned in different orientations (rotated 90 degrees or rotated in other directions) and the spatially relative terms utilized in this disclosure can be interpreted accordingly.

"Group" refers to a group of the Periodic Table of Elements according to the International Union of Pure and Applied Chemistry ("IUPAC") Groups 1-18 grouping system.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within $\pm$ 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Although specific embodiments have been described, alternatives, modifications, variations, improvements, and substantial equivalents not currently contemplated or foreseen may occur to applicants or those skilled in the art. Accordingly, the appended claims, as filed and as modified, are intended to cover all such alternatives, modifications, variations, improvements and substantial equivalents.

Hereinafter, an electrode assembly and a rechargeable battery including the electrode assembly according to example embodiments will be described in more detail.

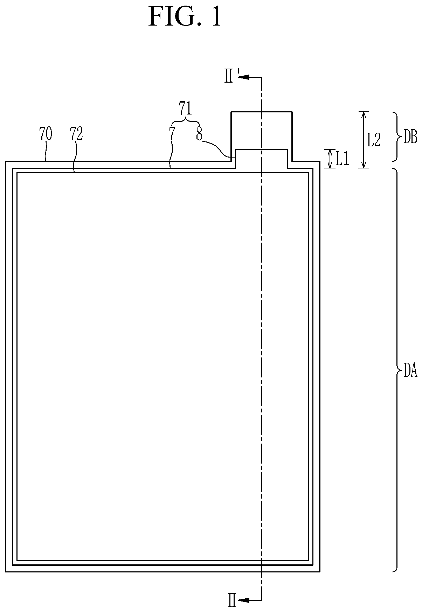

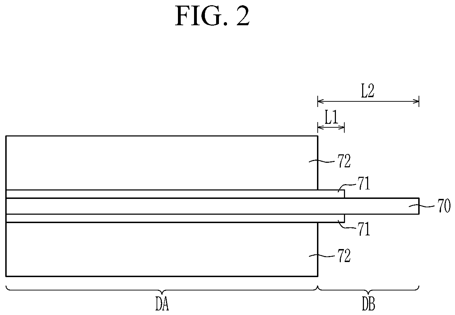

FIG. 1 is a top plan view (e.g., a plan view) of an electrode according to an embodiment, and FIG. 2 is a cross-sectional view taken along a line II-II' of FIG. 1.

As shown in FIG. 1 and FIG. 2, an electrode according to an embodiment may include a substrate 70, a functional layer 71 formed on the substrate 70, and an active material layer 72 formed on the functional layer 71.

If (e.g., when) the electrode is a positive electrode, the substrate 70 may include aluminum (Al).

The functional layer 71 may include a material including a compound represented by Chemical Formula 1, a compound represented by Chemical Formula 2, or a combination thereof:

Chemical Formula 1 $\quad\quad Li_{a1}M^1_{x1}Fe_{1-x1}PO_4$

In Chemical Formula 1, $0.90 \le a1 \le 1.5$, $0 \le x1 \le 0.4$, $M^1$ is Mg, Co, Ni or a combination thereof.

Chemical Formula 2 $\quad\quad Lia2Mnx2Fe_{1-x2}PO_4$

In Chemical Formula 2, $0.90 \le a2 \le 1.5$, $0.1 \le x2 \le 1$.

The compound represented by Chemical Formula 1 may be a lithium iron phosphate compound. In Chemical Formula 1, a mole fraction of lithium may be appropriately adjusted between approximately 0.9 and 1.5-for example, $0.90 \le a1 \le 1.2$, or $0.95 \le a1 \le 1.1$. In Chemical Formula 1, Mn may exist in addition to Fe, and a mole fraction thereof may be $0 \le x1 \le 0.7$, $0 \le x1 \le 0.5$, $0 \le x1 \le 0.3$, $0 \le x1 \le 0.1$ or $0 \le x1 \le 0.05$.

The compound represented by Chemical Formula 2 may be lithium manganese phosphate. In Chemical Formula 2, a mole fraction of lithium, like Chemical Formula 1, may be $0.90 \le a2 \le 1.2$ or $0.95 \le a2 \le 1.1$. In Chemical Formula 2, the mole fraction of manganese may be $0.2 \le x2 \le 0.9$, $0.3 \le x2 \le 0.9$, or $0.4 \le x2 \le 0.8$, and when $0.5 \le x2 \le 0.9$, lithium ion conduction ability is high.

For example, the functional layer 71 is a lithium transition metal phosphate and may include $LiFePO_4$, $LiMn_{0.5}Fe_{0.5}PO_4$, $LiMnPO_4$, and/or the like.

The functional layer 71 includes the material and may further include a binder and/or conductive material (e.g., an electron conductor). Here, the content (e.g., amount) of the material may be about 80wt% to about 95wt% with respect to the total weight of the functional layer 71. The content (e.g., amount) of the binder may be about 1wt% to about 10wt% for the total weight of the functional layer 71, and the content (e.g., amount) of the conductive material may be about 0.1wt% to about 10wt% based on the total weight.

The binder may adhere material particles within the functional layer to each other and adhere the material particles to the substrate, and the binder may include a non-water-soluble binder, a water-soluble binder, or a combination thereof.

The non-water-soluble binder may be polyvinylchloride, carboxylated polyvinylchloride, polyvinylfluoride, a polymer including ethylene oxide, ethylene propylene copolymer, polystyrene, polyvinylpyrrolidone, polyurethane, polytetrafluoroethylene, polyvinylidene fluoride, polyethylene, polypropylene, polyamide-imide, polyimide, or a combination thereof.

Water-soluble binders include rubber-based binders or polymer resin binders. The rubber-based binder may be selected from among styrene-butadiene rubber (SBR), acrylated styrene-butadiene rubber, acrylonitrile-butadiene rubber (ABR), acryl rubber, butyl rubber, fluorine rubber, and one or more combinations thereof. The polymer resin binder may be selected from among polyethyleneoxide, polyvinylpyrrolidone, polyepichlorohydrin, polyphosphazene, polyacrylonitrile, ethylenepropylenediene copolymer, polyvinylpyridine, chlorosulfonated polyethylene, latex, polyester resin, acryl resin, phenol resin, epoxy, polyvinyl alcohol, and a combination of resins thereof.

When utilizing a water-soluble binder as the binder, it may further include cellulose-based compounds that can impart viscosity. This cellulose-based compound may be utilized by mixing one or more types (kinds) of carboxymethyl cellulose, hydroxypropylmethyl cellulose, methyl cellulose, or alkali metal salts thereof. Na, K or Li may be utilized as an alkali metal.

The conductive material is utilized to impart conductivity, and the conductive material may include a carbon-based material, a metal-based material, a conductive polymer, or a mixture thereof.

The conductive material included in the functional layer 71 may be any electron conductive material that does not cause chemical changes in a battery that includes it. For example, the conductive material including natural graphite, artificial graphite, carbon black, acetylene black, ketjen black, denka black, carbon-based material such as carbon fiber, copper, nickel, aluminum, silver, and the like, and including metallic materials such as metal powder or metal fiber type or kind; conductive polymer such as polyphenylene derivatives; or a mixture thereof may be utilized. The active material layer 72 includes a positive active material, and the positive active material may utilize a compound (lithiated intercalation compound) capable of reversibly intercalating and deintercalating lithium ions. The positive active material is a compound expressed or represented by at least one selected from among following example formulates. That is, example formulas may include:

$Li_aA_{1-b}X_bD_2$ ($0.90 \le a \le 1.8$, $0 \le b \le 0.5$);
$Li_aA_{1-b}X_bO_{2-c}D_c$ ($0.90 \le a \le 1.8$, $0 \le b \le 0.5$, $0 \le c \le 0.05$);
$Li_aE_{1-b}X_bPO_{2-c}D_c$ ($0.90 \le a \le 1.8$, $0 \le b \le 0.5$, $0 \le c \le 0.05$);
$LiaE2-bXbO4-cDc$ ($0.90 \le a \le 1.8$, $0 \le b \le 0.5$, $0 \le c \le 0.05$);

$Li_aNi_{1-b-c}Co_bX_cD_a$ $(0.90 \leq a \leq 1.8, 0 \leq b \leq 0.5, 0 \leq c \leq 0.5, 0 < \alpha \leq 2)$;
$Li_aNi_{1-b-c}Co_bX_cO_{2-\alpha}T_\alpha$ $(0.90 \leq a \leq 1.8, 0 \leq b \leq 0.5, 0 \leq c \leq 0.05, 0 < \alpha < 2)$;
$Li_aNi_{1-b-c}Co_bX_cO_{2-\alpha}T_2$ $(0.90 \leq a \leq 1.8, 0 \leq b \leq 0.5, 0 \leq c \leq 0.05, 0 < \alpha < 2)$;
$Li_aNi_{1-b-c}Mn_bX_cD_\alpha$ $(0.90 \leq a \leq 1.8, 0 \leq b \leq 0.5, 0 \leq c \leq 0.05, 0 < \alpha \leq 2)$;
$Li_aNi_{1-b-c}Mn_bX_cO_{2-\alpha}T_\alpha$ $(0.90 \leq a \leq 1.8, 0 \leq b \leq 0.5, 0 \leq c \leq 0.05, 0 < \alpha < 2)$;
$Li_aNi_{1-b-c}Mn_bX_cO_{2-\alpha}T_2$ $(0.90 \leq a \leq 1.8, 0 \leq b \leq 0.5, 0 \leq c \leq 0.05, 0 < \alpha < 2)$;
$Li_aNi_bE_cG_dO_2$ $(0.90 \leq a \leq 1.8, 0 \leq b \leq 0.9, 0 \leq c \leq 0.5, 0.001 \leq d \leq 0.1)$;
$Li_aNi_bCo_cMn_dG_eO_2$ $(0.90 \leq a \leq 1.8, 0 \leq b \leq 0.9, 0 \leq c \leq 0.5, 0 \leq d \leq 0.5, 0.001 \leq e \leq 0.1)$;
$Li_aNiG_bO_2$ $(0.90 \leq a \leq 1.8, 0.001 \leq b \leq 0.1)$;
$Li_aCoG_bO_2$ $(0.90 \leq a \leq 1.8, 0.001 \leq b \leq 0.1)$;
$Li_aMn_{1-b}G_bO_2$ $(0.90 \leq a \leq 1.8, 0.001 \leq b \leq 0.1)$;
$Li_aMn_2G_bO_4$ $(0.90 \leq a \leq 1.8, 0.001 \leq b \leq 0.1)$;
$Li_aMn_{1-g}G_gPO_4$ $(0.90 \leq a \leq 1.8, 0 \leq g \leq 0.5)$;
$QO_2$; $QS_2$; $LiQS_2$;
$V_2O_5$; $LiV_2O_5$;
$LiZO_2$;
$LiNiVO_4$;
$Li_{(3-f)}J_2 PO_{43}$ $(0 \leq f \leq 2)$;
$Li_{(3-f)}Fe_2 PO_{43}$ $(0 \leq f \leq 2)$; and/or
$Li_aFePO_4$ $(0.90 \leq a \leq 1.8)$.

In the above formulas, A is selected from among a group consisting of Ni, Co, Mn, and a combination thereof; X is selected from among a group consisting of Al, Ni, Co, Mn, Cr, Fe, Mg, Sr, V, a rare earth element, and a combination thereof; D is selected from among a group consisting of O, F, S, P, and a combination thereof; E is selected from among a group consisting of Co, Mn, and a combination thereof; T is selected from among a group consisting of F, S, P, and a combination thereof; G is selected from among a group consisting of Al, Cr, Mn, Fe, Mg, La, Ce, Sr, V, and a combination thereof; Q is selected from among the group consisting of Ti, Mo, Mn, and a combination thereof; Z is selected from among a group consisting of Cr, V, Fe, Sc, Y, and a combination thereof; and J is selected from among a group consisting of V, Cr, Mn, Co, Ni, Cu, and a combination thereof.

Of course, a coating layer may be utilized on the surface of the compound, or a mixture of the compound and a compound included in the coating layer may be utilized. The coating layer may include at least one coating element compound of an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer formation process may utilize any coating method utilizing those elements in the compound that do not adversely affect the physical properties of the positive electrode active material-for example, spray coating, dipping, etc.

An example of the positive active material may include a positive active material represented by Chemical Formula A1:

Chemical Formula A1 $\quad\quad Li_{a11}Ni_{x11}M^{11}{}_{y11}M^{12}{}_{1-x11-y12}O_2$

In Chemical Formula A1, $0.9 \leq a11 \leq 1.8$, $0.3 \leq x11 \leq 1$, $0 \leq y11 \leq 0.7$, $M^{11}$ and $M^{12}$ are each selected independently from among Al, B, Ce, Co, Cr, F, Mg, Mn, Mo, Nb, P, S, Si, Sr, Ti, V, W, Zr, and combinations thereof.

In Chemical Formula A1, $0.4 \leq x11 \leq 1$ and $0 \leq y11 \leq 0.6$, may be $0.5 \leq x11 \leq 1$ and $0 \leq y11 \leq 0.5$, $0.6 \leq x11 \leq 1$ and $0 \leq y11 \leq 0.4$, or $0.7 \leq x11 \leq 1$ and $0 \leq y11 \leq 0.3$, or $0.8 \leq x11 \leq 1$ and $0 \leq y11 \leq 0.2$, or $0.9 \leq x11 \leq 1$ and $0 \leq y11 \leq 0.1$.

The positive active material may include, as an example, lithium nickel cobalt composite oxide represented by Chemical Formula A2 .

Chemical Formula A2 $\quad\quad Li_{a12}Ni_{x12}Co_{y12}M^{13}{}_{1-x12-y12}O_2$

In Chemical Formula A2, $0.9 \leq a12 \leq 1.8$, $0.3 \leq x12 \leq 0.99$, $0.01 \leq y12 \leq 0.7$, and $M^{13}$ are selected from among Al, B, Ce, Cr, F, Mg, Mn, Mo, Nb, P, S, Si, Sr, Ti, V, W, Zr, and combinations thereof.

In Chemical Formula A2, $0.3 \leq x12 \leq 0.99$ and $0.01 \leq y12 \leq 0.7$, $0.4 \leq x12 \leq 0.99$ and $0.01 \leq y12 \leq 0.6$, $0.5 \leq x12 \leq 0.99$ and $0.01 \leq y12 \leq 0.5$, or $0.6 \leq x12 \leq 0.99$ and $0.01 \leq y12 \leq 0.4$, or $0.7 \leq x12 \leq 0.99$ and $0.01 \leq y12 \leq 0.3$, or $0.8 \leq x12 \leq 0.99$ and $0.01 \leq y12 \leq 0.2$, or $0.9 \leq x12 \leq 0.99$ and $0.01 \leq y12 \leq 0.1$.

The positive active material may include, as a specific example, lithium nickel cobalt composite oxide represented by Chemical Formula A3 .

Chemical Formula A3 $Li_{a13}Ni_{x13}Co_{y13}M^{14}_{z13}M^{15}_{1-x13-y13-z13}O_2$

In Chemical Formula A3, $0.9 \leq a13 \leq 1.8$, $0.3 \leq x13 \leq 0.98$, $0.01 \leq y13 \leq 0.69$, $0.01 \leq z13 \leq 0.69$, $M^{14}$ is selected from among Al, Mn, and combinations thereof, and $M^{15}$ is selected from among B, Ce, Cr, F, Mg, Mo, Nb, P, S, Si, Sr, Ti, V, W, Zr, and combinations thereof.

In Chemical Formula A3, $0.4 \leq x13 \leq 0.98$, $0.01 \leq y13 \leq 0.59$, and $0.01 \leq z13 \leq 0.59$, $0.5 \leq x13 \leq 0.98$, $0.01 \leq y13 \leq 0.49$, and $0.01 \leq z13 \leq 0.49$, or $0.6 \leq x13 \leq 0.98$, $0.01 \leq y13 \leq 0.39$, and $0.01 \leq z13 \leq 0.39$, or $0.7 \leq x13 \leq 0.98$, $0.01 \leq y13 \leq 0.29$, and $0.01 \leq z13 \leq 0.29$, or $0.8 \leq x13 \leq 0.98$, $0.01 \leq y13 \leq 0.19$, and $0.01 \leq z13 \leq 0.19$, or $0.9 \leq x13 \leq 0.98$, $0.01 \leq y13 \leq 0.09$, and $0.01 \leq z13 \leq 0.09$.

The positive active material layer 72 may include a positive active material and further include a binder and/or conductive material. Here, the content (e.g., amount) of the positive active material may be about 90 wt% to about 98 wt%-- for example, about 90 wt% to about 95 wt%--with respect to the total weight of the positive active material layer. The content (e.g., amount) of the binder and the conductive material may be about 1 wt% to about 5 wt%, respectively, based on the total weight of the positive active material layer.

The binder may be the same as the binder that constitutes the functional layer 71, but it is not limited thereto.

The binder adheres the positive active material particles to each other and also adheres the positive active material to the functional layer or the substrate. The conductive material is utilized to provide conductivity to the electrode and is the same as the conductive material that makes up the functional layer 71.

In some embodiments, the substrate 70 according to an embodiment has an electrode active region DA and an electrode uncoated region DB, an active material layer 72 is formed in the electrode active region DA, and a separate layer is not formed in the electrode uncoated region DB, and the substrate is exposed.

At this time, the electrode uncoated region DB is for drawing a current to the outside, and is limited to the portion protruding from the electrode active region DA, excluding the substrate portion exposed at the edge around (e.g., surrounding) the active material layer.

The functional layer 71 includes a first portion 7 formed in the electrode active region DA and overlapping the active material layer 72, and a second portion 8 extending into the electrode uncoated region DB.

The functional layer 71 has a higher resistance value (e.g., electron resistance or electrical resistance) than the resistance of the substrate 70 and the active material layer 72, and acts as an insulation layer. Therefore, the second portion 8 is formed only in one portion of the electrode uncoated region DB so that the portion being welded to be drawn to the outside is exposed, and the area of the second portion 8 is formed to be less than about 60% of the electrode uncoated region DB area.

At this time, the width L2 of the electrode uncoated region DB may be about 2 mm to about 7 mm, and the width L1 of the second portion 8 may be about 0.1 mm to about 3 mm.

The functional layer 71 may be formed with a wider area than the active material layer 72 and may be protruding from the active material layer 72, but may be formed smaller than the substrate 70 (e.g., the substrate 70 may protrude from the active material 72 further than the functional layer 71 protrudes from the active material layer 72), so the boundary line of the functional layer 71 may be positioned within the boundary line of the substrate 70.

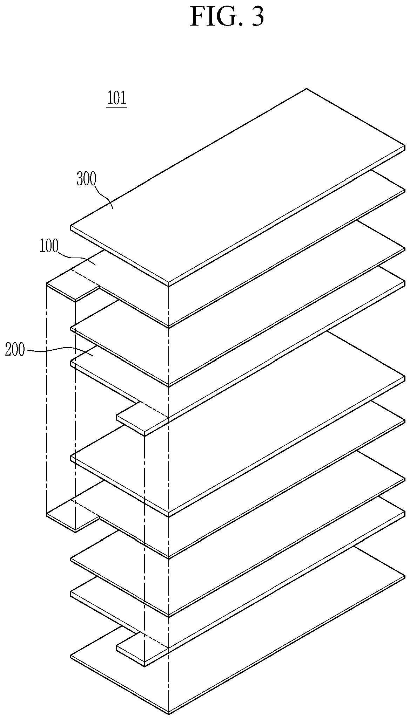

The above electrode may be utilized in a stacked-type or kind electrode assembly, and hereinafter an electrode assembly according to an embodiment is described with reference to FIG. 3.

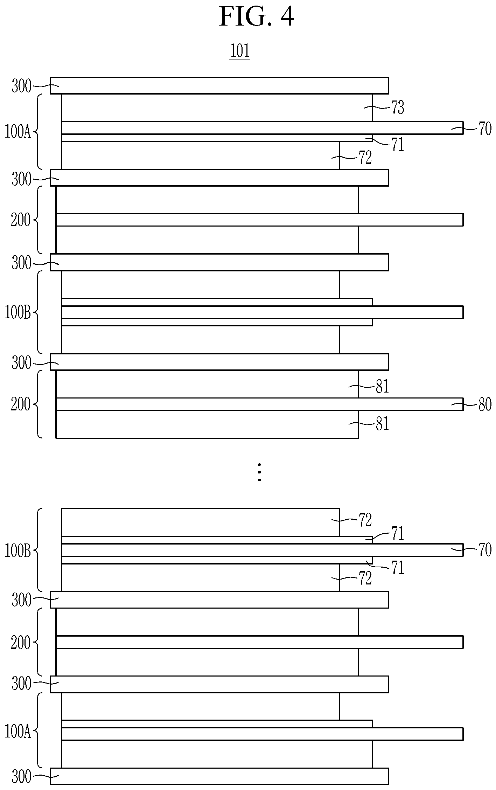

FIG. 3 is a schematic exploded perspective view of a stacked-type or kind electrode assembly according to an embodiment, and FIG. 4 is a schematic cross-sectional view of another stacked-type or kind electrode assembly according to an embodiment.

Referring to FIG. 3 and FIG. 4, an electrode assembly 101 according to an embodiment is a stacked-type or kind electrode assembly 101 in which a positive electrode 100 and a negative electrode 200 are repeatedly stacked with a separator 300 in between.

The separator 300 is a polymer film that allows lithium ions to pass through, polyethylene, polypropylene, polyvinylidene fluoride or two or more multilayers thereof may be utilized, and mixed multilayers such as a polyethylene/polypropylene two-layer separator, a polyethylene/polypropylene/polyethylene three-layer separator, and a polypropylene/polyethylene/polypropylene three-layer separator may be utilized.

The separator 300 is shown in a sheet shape like the positive electrode and the negative electrode, but it is not limited thereto and may form a Z-shaped stacked assembly structure by continuously passing between the separated negative electrode and positive electrode.

The negative electrode 200 includes an electrode active region in which an active material layer 81 is formed on a substrate 80 made of copper (Cu), and an electrode uncoated region in which the substrate is exposed by not applying an active material.

The negative active material included in active material layer 81 may be a carbon-based active material. The carbon-based negative active material may be an artificial graphite or a mixture of an artificial graphite and a natural graphite. When the carbon-based negative active material is a crystalline carbon-based material obtained by mixing natural graphite with artificial graphite or artificial graphite, the crystalline carbon-based material has more developed crystalline characteristics than an amorphous carbon-based negative active material and thus may further improve orientation characteristics of the carbon-based negative active material in an electrode plate with respect to an external magnetic field. The artificial graphite or natural graphite may be amorphous, sheet-shaped, flake-shaped, spherically shaped, fiber-shaped, or a combination thereof without a particular limit. Additionally, when utilizing the mixture of the artificial graphite and the natural graphite, the mixing ratio may be about 70:30 wt% to about 95:5 wt%.

In some embodiments, the negative active material layer 81 may further include at least one of an Si-based negative active material, an Sn-based negative active material, or an LiMOx-based negative active material (M = metal). When the negative active material layer further includes a carbon-based negative active material as the first negative active material and the negative active material as the second negative active material, the mixing ratio of the first and second negative active materials may be about 50:50 to about 99:1 wt%.

The LiMOx-based negative active material may be a lithium vanadium oxide (M = metal).

The Si-based negative active material may be Si, an Si-C composite, $SiO_x$ (0 < x < 2), or an Si-Q alloy (Q is an element selected from among the group consisting of an alkali metal, an alkaline earth metal, a Group 13 element, a Group 14 element, a Group 15 element, a Group 16 element, a transition metal, a rare earth element, and a combination thereof), and the Sn-based negative active material may include Sn, $SnO_2$, and a Sn-R alloy (R is an element selected from among the group consisting of an alkali metal, an alkaline earth metal, a Group 13 element, a Group 14 element, a Group 15 element, a Group 16 element, a transition metal, and a rare earth element, and does not include Sn), and at least one of them may be mixed with $SnO_2$. The element Q and the element R may be at least one element selected from among the group consisting of Mg, Ca, Sr, Ba, Ra, Sc, Y, Ti, Zr, Hf, Rf, V, Nb, Ta, Db, Cr, Mo, W, Sg, Pb, Pt, Cu, Ag, Au, Zn, Cd, B, Al, Ga, Sn, In, TI, Ge, P, As, Sb, Bi, S, Se, Te, Po, and one or more combinations thereof.

The content (e.g., amount) of the negative active material in the negative active material layer 81 may be about 95 wt% to about 99 wt% based on a total weight of the negative material layer.

The negative active material includes a binder, and may optionally further include a conductive material. The content (e.g., amount) of the binder in the negative active material may be about 1 wt% to about 5 wt% based on the total weight of the negative active material. In some embodiments, when the conductive material is further included, the negative active material may be utilized in an amount of about 90 wt% to about 98 wt%, the binder may be utilized in an amount of about 1 wt% to about 5 wt%, and the conductive material may be utilized in an amount of about 1 wt% to about 5 wt%.

The binder serves to adhere the negative active material particles to each other and also to adhere the negative active material to the negative substrate. As the binder, a non-aqueous binder, an aqueous binder, or a combination thereof may be utilized.

Examples of the non-aqueous binder may include polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, polyamide-imide, polyimide, and/or a combination thereof.

Examples of the aqueous binders may include styrene-butadiene rubber, acrylated styrene-butadiene rubber (SBR), acrylonitrile-butadiene rubber, acryl rubber, butyl rubber, an ethylene-propylene copolymer, polyepichlorohydrin, polyphosphazene, polyvinyl pyridine, chlorosulfonated polyethylene, latex, a polyester resin, an acryl resin, a phenol resin, an epoxy resin, a polyvinyl alcohol, an acrylate resin, and/or a combination thereof.

When the aqueous binder is utilized as a negative electrode binder, a cellulose-based compound capable of imparting viscosity may be further contained as a thickener. As the cellulose-based compound, carboxymethyl cellulose, hydroxypropylmethyl cellulose, methyl cellulose, an alkali metal salt thereof, and/or the like may be utilized in combination. As the alkali metal, Na, K, or Li may be utilized. The content (e.g., amount) of the thickener may be about 0.1 to about 3 parts by weight based on about 100 parts by weight of the negative active material.

The conductive material is utilized to impart conductivity to the electrode, and any electronic conductive material that does not cause a chemical change in the battery may be utilized. Examples of the conductive material may include a carbon-based material such as natural graphite, artificial graphite, carbon black, acetylene black, ketjen black, and/or carbon fiber; a metal powder such as copper, nickel, aluminum, and/or silver; a metal-based material such as metal fiber; a conductive polymer such as polyphenylene derivative; and/or a conductive material containing a mixture thereof.

A BET-specific surface area of the negative electrode active material layer may be less than about $3.0 m^2/g$ and may range from about $0.6 m^2/g$ to about $1.2 m^2/g$. When the BET-specific surface area of the negative electrode active material layer is less than about $3.0 m^2/g$, electrochemical lifespan characteristics of a cell may be improved.

The BET is measured by charging/discharging the lithium rechargeable battery including the negative electrode, cutting the negative electrode obtained by breaking the battery in a completely discharged state into a set or predetermined size, and subsequently putting the cut negative electrode into a BET sample holder.

The negative electrode may have a sectional loading level (L/L) of about $6 mg/cm^2$ to about $65 mg/cm^2$.

The positive electrode 100 includes an electrode coated region in which an active material is applied to a current collector of a metal substrate made of aluminum (Al), and an electrode uncoated region in which the metal substrate is exposed by not applying an active material. The positive electrode may include the electrodes shown in FIG. 1 and FIG. 2.

The negative electrode 200 may be formed larger than the positive electrode 100, and a short circuit may occur when the active material layer and the electrode base of different polarities come into contact, but in one embodiment of the present disclosure, by forming a functional layer 71 having a larger resistance value than the electrode base and the active material layer, the effect of insulation between them can be achieved.

The plurality of electrode uncoated regions of the positive electrode 100 and the negative electrode 200 may be electrically connected to the outer terminal by being electrically connected with the same polarity. The electrode uncoated region of the positive electrode 100 and the electrode uncoated region of the negative electrode 200 may protrude in substantially the same direction, but they are not limited thereto and they may protrude in the opposite direction and be spaced apart from each other.

The separator 300 may be formed larger than the negative electrode 200 and the positive electrode 100 and protrude outward from the negative electrode 200 and the positive electrode 100.

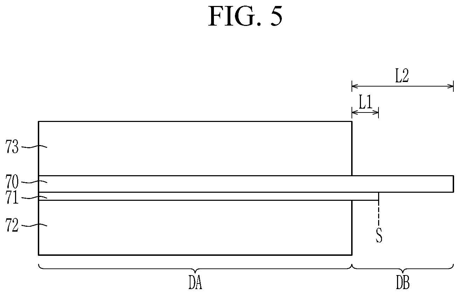

FIG. 5 is a cross-sectional view showing a positive electrode according to an embodiment taken along a line II-II' in FIG. 1.

Referring to FIG. 4 and FIG. 5, in an electrode assembly 101, a plurality of positive electrodes, separators, and negative electrodes are repeatedly stacked, the first positive electrode 100A, positioned on the outermost side (e.g., on a top side or a bottom side or on an outermost top side or an outermost bottom side) of the electrode assembly 101, has an active material layer 72 formed only on one side of the substrate, and the second positive electrode 100B, positioned relatively at the center of the electrode assembly 101, has an active material layer formed on both (e.g., opposite) sides of the active material layer 72.

For the first positive electrode 100A, the active material layer 72 is formed on one surface of the substrate 70 facing the negative electrode-that is, on one surface relatively adjacent to the center of the electrode assembly.

The one surface of the substrate 70 is disposed toward (e.g., facing toward) the negative electrode 200 and the center of the stacked-type or kind electrode assembly 101, along a stacking direction (e.g., in a stacking direction or a thickness direction) of the stacked-type or kind electrode 101.

Also, an active material layer is not formed on the other surface of the substrate 70-that is, the other surface positioned relatively far from the center.

The previously described functional layer 71 may be positioned between the substrate 70 and the active material layer 72, and a ceramic layer 73 in contact with the substrate 70 may be formed on the other surface of the substrate 70.

The ceramic layer 73, like the functional layer 71, includes a portion protruding toward the electrode uncoated region (e.g., region of the substrate 70 that is uncoated). The ceramic layer 73 may protrude to the same width as the functional layer 71, but depending on the process, there may be an error of about ±2 mm from one end S of the functional layer 71. The ceramic layer 73 may be formed with the thickness of 5 μm to 20 μm.

The ceramic layer 73 is an insulating material that can prevent or reduce the battery from being short-circuited by an external impact.

The ceramic layer 73 may include a ceramic and a binder, and among the total weight of the ceramic layer, with the ceramic including about 80wt% to about 97wt% and the binder including about 3wt% to about 20wt%.

The ceramic may include endothermic ceramics such as pseudoboehmite and boehmite; a general ceramic such as oxidation aluminum ($AlO_3$, $Al_2O_3$, etc.), silicon dioxide ($SiO_2$), oxidation magnesium (MgO), oxidation titanium ($TiO_2$), oxidation hafnium ($HfO_2$), oxidation tin (SnO), cerium (IV) oxide ($CeO_2$), oxidation nickel (NiO), oxidation zinc (ZnO), oxidation calcium (CaO), oxidation zirconium ($ZrO_2$), oxidation yttrium ($Y_2O_3$), carbonization silicon (SiC), etc.; or a combination thereof.

Ordinary ceramics are insulating materials with only an insulating characteristic, and endothermic ceramics are endothermic materials with both (e.g., simultaneously) insulating and endothermic characteristics.

The binder may include a non-water-soluble binder, a water-soluble binder, or a combination thereof.

The binder adheres the materials within the ceramic layer well to each other and ensures that the ceramic layer adheres well to the substrate.

As the non-water-soluble binder, polyvinylchloride, carboxylate polyvinylchloride, polyvinylfluoride, a polymer including ethylene oxide, ethylene propylene copolymer, polystyrene, polyvinylpyrrolidone, polyurethane, polytetrafluoroethylene, polyvinylidene fluoride, polyethylene, polypropylene, polyamide-imide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and combinations thereof. The polymer resin binder may be selected from among polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When utilizing the water-soluble binder as the binder, it may further include a cellulose-based compound that can impart viscosity. As the cellulose-based compound, one or more of carboxymethyl cellulose, hydroxypropylmethyl cellulose, methyl cellulose, or alkali metal salts thereof may be mixed and utilized. As the alkali metal, Na, K, or Li may be utilized.

The electrode assembly 101 may be accommodated with an electrolyte in a prismatic case of a pouch or a can shape and utilized as a rechargeable battery.

The electrolyte includes a non-aqueous organic solvent and lithium salt. The non-aqueous organic solvent serves as a medium through which ions involved in the electrochemical reaction of the battery can move.

The lithium salt is dissolved in an organic solvent and acts as a supply source of lithium ion in the battery, enabling basic lithium secondary battery operation, and is a material that promotes the movement of lithium ions between the positive and negative electrodes. Representative examples of such lithium salts include one or two or more selected from among the group consisting of $LiPF_6$, $LiBF_4$, $LiSbF_6$, $LiAsF_6$, $LiN(SO_2 C_2F_5)_2$, $Li(CF_3 SO_2)_2 N$, $LiN(SO_3C_2F_5)_2$, $LiC_4F_9SO_3$, $LiClO_4$, $LiAlO_2$, $LiAlCl_4$, $LiN(Cx F_{2x+1} SO_2)$, $(C yF_{2y+1}SO_2)$, (x and y are natural numbers, such as an integer of 1 to 20), LiCl, LiI and $LiB C_2O_{42}$ (lithium bisoxalate borate (lithium bis(oxalato) borate: LiBOB) as a supporting electrolytic salt.

The lithium salt concentration should be utilized within the range of about 0.1M to about 2.0M. When the concentration of lithium salt is in this range, the electrolyte has appropriate or suitable conductivity and viscosity, so it can exhibit excellent or suitable electrolyte performance, and lithium ions can move effectively.

In present disclosure, "not include a or any 'component'", "exclude a or any 'component'", "'component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be practical embodiments, it is to be understood that the disclosure is not limited to the disclosed embodiments, but, on the contrary, is intended to cover one or more suitable modifications and equivalent arrangements included within the scope of the appended claims.

## Description of symbols

| | | | |
|---|---|---|---|
| 70: | substrate | 71: | functional layer |
| 72: | active material layer | 100: | positive electrode |
| 101: | electrode assembly | 200: | negative electrode |
| 300: | separator | | |

## Claims

1. An electrode assembly (101) comprises:

   a stacked-type electrode assembly (101) in which positive electrodes (100), separators (300), and negative electrodes (200) are alternately stacked,
   wherein the positive electrode (100) is on an outermost side of the stacked-type electrode assembly (101), the positive electrode (100) comprises a substrate (70, 80) having an electrode uncoated region and an electrode active region, an active material layer (72, 81) on one surface of the substrate (70, 80) in the electrode active region, and a ceramic layer (73) on the opposite surface of the substrate (70, 80) in the electrode active region, and

the one surface of the substrate (70, 80) is facing toward the negative electrode (200) and the center of the stacked-type electrode assembly (101) in a stacking direction of the stacked-type electrode assembly (101).

2. The electrode assembly (101) as claimed in claim 1, further comprising
a functional layer (71) between the substrate (70, 80) and the active material layer (81).

3. The electrode assembly (101) as claimed in claim 1 or 2, wherein,
the functional layer (71) comprises a first portion (7) that overlaps the electrode active region and a second portion (8) that extends from the first portion (7) to the electrode uncoated region.

4. The electrode assembly (101) as claimed in any one of claims 1 to 3, wherein,
the ceramic layer (73) is in the same planar shape as the functional layer (71) .

5. The electrode assembly (101) as claimed in any one of claims 1 to 4, wherein,
the area of the second portion (8) is less than about 60% of the electrode uncoated region.

6. The electrode assembly (101) as claimed in any one of claims 1 to 5, wherein,
the width of the second portion (8) is about 0.1mm to about 3mm.

7. The electrode assembly (101) as claimed in any one of claims 1 to 6, wherein,
a resistance value of the functional layer (71) is greater than each of the substrate (70, 80) and the active material layer (81).

8. The electrode assembly (101) as claimed in any one of claims 1 to 7, wherein,
a boundary of the functional layer (71) is positioned within a boundary of the substrate (70, 80).

9. The electrode assembly (101) as claimed in any one of claims 1 to 8, wherein:

the functional layer (71) comprises a material comprising a compound represented by Chemical Formula 1, a compound represented by Chemical Formula 2, or a combination thereof:

Chemical Formula 1 $\quad\quad Li_{a1}M^1{}_{x1}Fe_{1-x1}PO_4$

in Chemical Formula 1,
$0.90 \leq a1 \leq 1.5, 0 \leq x1 \leq 0.4$, and $M^1$ is Mg, Co, Ni or a combination thereof.

Chemical Formula 2 $\quad\quad Li_{a2}Mn_{x2}Fe_{1-x2}PO_4$

in Chemical Formula 2,

$$0.90 \leq a2 \leq 1.5, \; 0.1 \leq x2 \leq 1.$$

10. The electrode assembly (101) as claimed in any one of claims 1 to 9, wherein the functional layer (71) includes the material and include a binder and/or conductive material, wherein
preferably:

- the amount of the material is of 80wt% to 95wt% with respect to the total weight of the functional layer (71); and/or
- the amount of the binder is 1wt% to 10wt% for the total weight of the functional layer (71); and/or
- the amount of the conductive material is 0.1wt% to 10wt% based on the total weight.

11. The electrode assembly (101) as claimed in any one of claims 1 to 10, wherein the BET-specific surface area of the negative electrode active material layer is less than about $3.0m^2/g$ and ranges from $0.6m^2/g$ to $1.2m^2/g$.

12. The electrode assembly (101) as claimed in any one of claims 1 to 11, wherein,
the width of the electrode uncoated region is about 2 mm to about 7 mm.

**13.** The electrode assembly (101) as claimed in any one of claims 1 to 12, wherein,
the electrode uncoated region protrudes from one side of the electrode active region.

**14.** The electrode assembly (101) as claimed in any one of claims 1 to 13, wherein,
a distance between a border of the positive electrode (100) and a border of the negative electrode (200) is about 0.5 mm to about 3.0 mm.

**15.** A rechargeable battery comprising:
the electrode assembly (101) as claimed in any one of claims 1 to 14 and an electrolyte.

# FIG. 1

# FIG. 2

# FIG. 3

# FIG. 4

101

# FIG. 5

Europäisches
Patentamt

European
Patent Office

Office européen
des brevets

# EUROPEAN SEARCH REPORT

**Application Number**

EP 24 18 6431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 951 959 A1 (CONTEMPORARY AMPEREX TECHNOLOGY CO LTD [CN]) 9 February 2022 (2022-02-09) * paragraphs [0055], [0056], [0068], [0074]; figures 5, 18 * | 1-15 | INV. H01M4/58 H01M4/66 H01M10/0585 |
| A | WO 2018/168271 A1 (PANASONIC IP MAN CO LTD [JP]) 20 September 2018 (2018-09-20) * the whole document * | 1-15 | |
| A | EP 3 506 403 B1 (CONTEMPORARY AMPEREX TECHNOLOGY CO LTD [CN]) 10 May 2023 (2023-05-10) * the whole document * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 10 December 2024 | Spingler, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 6431

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | | Publication date | Patent family member(s) | | Publication date |
|---|---|---|---|---|---|
| EP 3951959 | A1 | 09-02-2022 | CN | 111180736 A | 19-05-2020 |
| | | | CN | 113363500 A | 07-09-2021 |
| | | | EP | 3951959 A1 | 09-02-2022 |
| | | | JP | 7344309 B2 | 13-09-2023 |
| | | | JP | 2022526744 A | 26-05-2022 |
| | | | US | 2022085379 A1 | 17-03-2022 |
| | | | WO | 2020238156 A1 | 03-12-2020 |
| WO 2018168271 | A1 | 20-09-2018 | CN | 110178250 A | 27-08-2019 |
| | | | JP | 6868835 B2 | 12-05-2021 |
| | | | JP | WO2018168271 A1 | 16-01-2020 |
| | | | US | 2020006778 A1 | 02-01-2020 |
| | | | WO | 2018168271 A1 | 20-09-2018 |
| EP 3506403 | B1 | 10-05-2023 | CN | 109873163 A | 11-06-2019 |
| | | | EP | 3506403 A1 | 03-07-2019 |
| | | | HU | E062079 T2 | 28-09-2023 |
| | | | JP | 6858735 B2 | 14-04-2021 |
| | | | JP | 2019102425 A | 24-06-2019 |
| | | | PT | 3506403 T | 25-05-2023 |
| | | | US | 2019173089 A1 | 06-06-2019 |

EPO FORM P0459

For more details about this annex : see Official Journal of the European Patent Office, No. 12/82